# EUROPÄISCHE PATENTSCHRIFT

(11) **EP 3 087 561 B1**
(45) Veröffentlichungstag und Bekanntmachung des Hinweises auf die Patenterteilung: **06.02.2019**
(21) Anmeldenummer: 14808971.7
(22) Anmeldetag: 04.12.2014
(51) Int. Cl.: G10K 9/22, G10K 9/122

(54) **ULTRASCHALLSENSOR**
ULTRASONIC SENSOR
CAPTEUR À ULTRASONS

(30) Priorität: 23.12.2013 DE 102013022049
(43) Veröffentlichungstag der Anmeldung: 02.11.2016
(73) Patentinhaber: Valeo Schalter und Sensoren GmbH, 74321 Bietigheim-Bissingen (DE)
(72) Erfinder: LUDWIG, Michael, 68305 Mannheim (DE); KATZENBERGER, Wolfgang, 86650 Wemding (DE); TRIEBL, Stefan, 74321 Bietigheim-Bissingen (DE); WEHLING, Hans-Wilhelm, 74321 Bietigheim-Bissingen (DE); JOHN, Karl-Heinz, 86650 Wemding (DE); EIDEL, Oliver, 74321 Bietigheim-Bissingen (DE)
(86) Internationale Anmeldenummer: PCT/EP2014/076579
(87) Internationale Veröffentlichungsnummer: WO 2015/096962

(56) Entgegenhaltungen:
- EP-A1- 2 246 401
- EP-A2- 2 631 903
- DE-A1- 19 832 072
- DE-A1-102005 009 620
- DE-A1-102007 043 479
- DE-A1-102009 040 374
- JP-A- 2002 204 498
- JP-U- 3 183 082

## Beschreibung

Die Erfindung betrifft einen Ultraschallsensor mit einem Gehäuse und einer Membran, an der ein Piezoelement befestigt ist, und mit einem elektrischen Anschlussbereich, der einen Masseanschluss umfasst.

Solche Ultraschallsensoren werden in Kraftfahrzeugen als Komponenten von Parkhilfesystemen verwendet. Die Ultraschallsensoren dienen zur Abstandsmessung von Hindernissen, wobei die Ultraschallsensoren Ultraschallsignale ausstrahlen und an Hindernissen in der Nähe des Kraftfahrzeuges reflektierte Signale empfangen. Aus der Laufzeit des Signals kann der Abstand des Ultraschallsensors zu einem Hindernis bestimmt werden.

Aus der DE 10 2005 056 607 A1 ist ein Ultraschallsensor bekannt, der ein Gehäuse mit einem als Membran wirkenden Bodenabschnitt aufweist. Ein piezoelektrischer Vibrator ist an einer Innenfläche des Bodenabschnittes, welche in das Innere des Gehäuses gerichtet ist, befestigt. Der piezoelektrische Vibrator weist eine erste Elektrode an einer Befestigungsfläche des Vibrators auf, die an dem Bodenabschnitt befestigt ist, sowie eine zweite Elektrode an einer gegenüberliegenden Fläche des Vibrators. Zwischen der ersten Elektrode und dem Bodenabschnitt ist ein elektrisch leitendes Bauteil vorgesehen. Hierbei ist der Vibrator auf der einen Seite an eine Wechselspannung angeschlossen, und die andere Seite ist mit Masse verbunden.

Es ist außerdem bekannt, das Piezoelement mittels eines elektrisch leitenden Klebers an der Membran zu befestigen, was bezüglich der Funktion dem elektrisch leitenden Bauteil zwischen Vibrator und Bodenabschnitt entspricht.

DE 10 2007 043479 A1 beschreibt ein Verfahren zur Oberflächenbehandlung von Aluminium zur Herstellung einer elektronischen Kontaktierung und ein dementsprechendes Bauteil. DE 198 32 072 A1 offenbart einen piezoelektrischen elektroakustischen Konverter. EP 2 246 401 A1 beschreibt ein Verfahren zum Ankleben piezokeramischer Bauelemente und Klebemittel zur Durchführung des Verfahrens. JP 2002 204498 offenbart einen Ultraschallwellensensor mit einer Isolierschicht.

Der vorliegenden Erfindung liegt die Aufgabe zugrunde, einen Ultraschallsensor der eingangs genannten Gattung zu schaffen, der bezüglich seiner Herstellungskosten und/oder Qualität verbessert ist.

Diese Aufgabe wird durch einen Ultraschallsensor mit den Merkmalen des Anspruchs 1 gelöst.

Zwischen der Membran und dem Piezoelement ist eine Schicht aus einem elektrisch nicht leitenden Material angeordnet, und die Membran ist elektrisch leitend mit dem Masseanschluss verbunden. Der erfindungsgemäße Ultraschallsensor kann wegen der eindeutigen Potentialtrennung zwischen Piezoelement und Membran einfacher und in besserer Qualität gefertigt werden. Die Massenanbindung der Membran vermeidet Störsignale, die das Empfangen reflektierter Ultraschallsignale beeinflussen könnten.

Gemäß der Erfindung ist die Membran integraler Teil eines Membrantopfes, der an dem Gehäuse befestigt ist und der an seiner der Membran abgewandten Seite einen radialen Flansch aufweist.

Zur Anbringung des Membrantopfes am Gehäuse i sind an dem Gehäuse ein radialer Flansch und ein zum Membrantopf gerichteter Stutzen ausgebildet, die zur Aufnahme des Flansches am Membrantopf dienen. Zwischen dem Flansch des Membrantopfes und dem Flansch des Gehäuses ist ein Entkopplungselement (insbesondere auch Stopfen genannt) aus elektrisch leitfähigem Material und/oder mit elektrisch leitenden Stirnflächen, die insbesondere elektrisch leitend miteinander verbunden sind, angeordnet. Dies hat den Vorteil, dass eine direkte metallische Verbindung eines Kontaktelementes mit der Beschichtung auf der Stirnseite des Flansches an der Membran vermieden wird, um die durch Vibrationen von Metall auf Metall und damit verbundene Signalbeeinträchtigungen wie Rauschen zu verhindern. Weiter liegt an einer Stirnseite des Entkopplungselements ein Kontaktelement an, das mit dem Masseanschluss verbunden ist.

Der elektrische Anschlussbereich umfasst vorzugsweise einen in einem Stutzen am Gehäuse ausgebildeten Stecker.

Gemäß einer bevorzugten Ausgestaltung der Erfindung ist vorgesehen, dass die nicht leitende Schicht ein Lack ist, der an einer Elektrode des Piezoelementes aufgebracht ist. Der Lack ist vorzugsweise temperaturbeständig und hält einer hohen mechanischen Belastung stand. Das Auftragen der isolierenden Schicht aus einem Lack ist kostengünstig auf einfache Weise möglich. Vorzugsweise ist das Piezoelement mittels eines Klebers mit seiner Lackschicht an der Membran befestigt.

Zur besseren Kontaktierung für die Verbindung mit einem Masseanschluss ist es zweckmäßig, dass der Flansch eine Stirnseite mit einer elektrisch leitenden Oberfläche und/oder mit einer Beschichtung aus einem elektrisch leitenden Material aufweist. Das elektrisch leitende Material kann beispielsweise in einem flüssig-chemischen Prozess aufgetragen werden bzw. die elektrisch leitende Oberfläche kann so gebildet werden.
Ein Ausführungsbeispiel der Erfindung ist nachstehend anhand der Zeichnung näher erläutert. In der Zeichnung zeigt:
- Fig. 1: einen Längsschnitt durch Bauteile eines Ultraschallsensors im noch nicht zusammengefügten Zustand,
- Fig. 2: eine vergrößerte Darstellung eines Schnittes durch eine Membran mit dem daran befestigten Piezoelement,
- Fig. 3: einen Längsschnitt durch die Bauteile gemäß Fig. 1 im zusammengefügten Zustand in einer geänderten Perspektive.

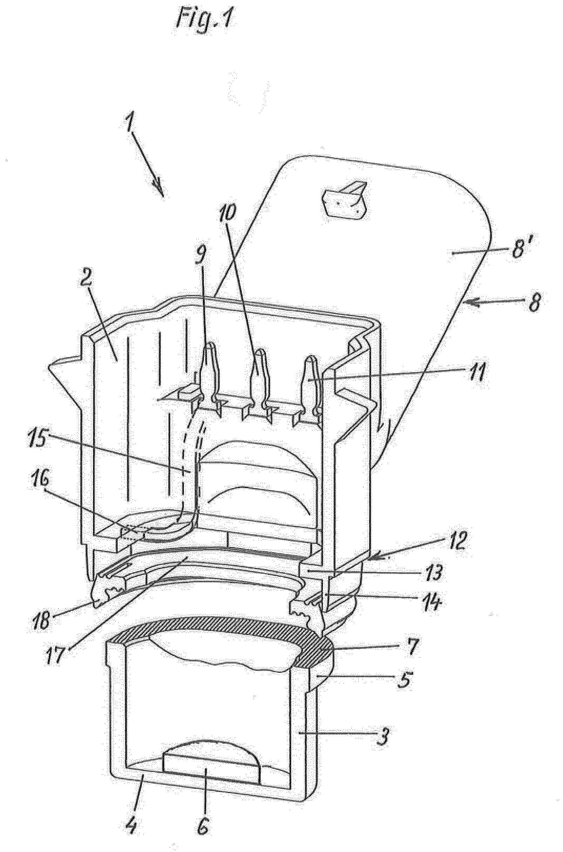

Der Längsschnitt in Fig. 1 ist eine perspektivische Darstellung eines Ultraschallsensors 1 mit einem an einem Gehäuse 2 befestigten Membrantopf 3. Der Membrantopf 3 weist bezogen auf die in Fig. 1 dargestellte Lage an seinem unteren Ende eine Membran 4 auf. Das heißt der Boden des Membrantopfes bildet die Membran bzw. auch Membranboden ganannt. Der Membrantopf 3 weist am oberen Ende einen radial nach außen gerichteten Flansch 5 auf. An der Innenseite der Membran 4 ist ein Piezoelement 6 befestigt. Der radiale Flansch 5 weist eine Stirnseite 7 mit einer Beschichtung aus einem elektrisch leitenden Material auf.

An dem Gehäuse 2 ist ein seitlich hervorstehender Stutzen 8' angeordnet, der zur Aufnahme eines Steckers dient und auf diese Weise einen elektrischen Anschluss 8 bildet. Aus diesem Stutzen 8' sind in das Gehäuse 2 elektrische Leiter zu Steckkontakten 9, 10, 11 geführt. Die Steckkontakte 10, 11 sind für Pluspotential und Minuspotential, und der Steckkontakt 9 ist ein Masseanschluss. Mit diesen Steckkontakten 9, 10 und 11 wird eine in der Zeichnung nicht dargestellte Platine verbunden, die im oberen Bereich des Gehäuses 2 einzusetzen ist. An einem dem Membrantopf 3 zugewandten Ende 12 des Gehäuses 2 befindet sich ein radial nach innen gerichteter Flansch 13, an dem ein zum Membrantopf 3 gerichteter Stutzen 14 angeformt ist. Ausgehend von dem Steckkontakt 9 ist ein vorzugsweise aus einem Flachdraht bestehender elektrischer Leiter 15 nach unten zu dem Ende 12 des Gehäuses 2 geführt und endseitig als Kontaktelement 16 so geformt, dass das Kontaktelement sich flach unter den Flansch 13 erstreckt.

Zwischen dem Flansch 12 des Gehäuses 2 und dem Flansch 5 des Membrantopfes 3 ist ein ringförmiges Entkopplungselement 17 (im Folgenden Stopfen 17 genannt) vorgesehen, dessen Außenumfang so bemessen ist, dass er innerhalb des Stutzens 14 am Flansch 13 aufgenommen werden kann. Der Stopfen 17 weist an seiner dem Membrantopf 3 zugewandten Seite einen axialen Wulst 18 auf. Der Stopfen 17 ist so ausgeführt, dass dieser aus elektrisch leitfähigem Material ist und/oder seine Stirnseiten elektrisch leitend sind. Insbesondere sind die Stirnseiten elektrisch leitend miteinander verbunden. Die Stirnseiten des Stopfens 17 sind elektrisch angebunden, insbesondere ist die eine Stirnseite mit der Stirnseite 7 des Flanschs 5 und die andere, gegenüberliegende Stirnseite mit dem Kontaktelement 16 elektrisch verbunden.

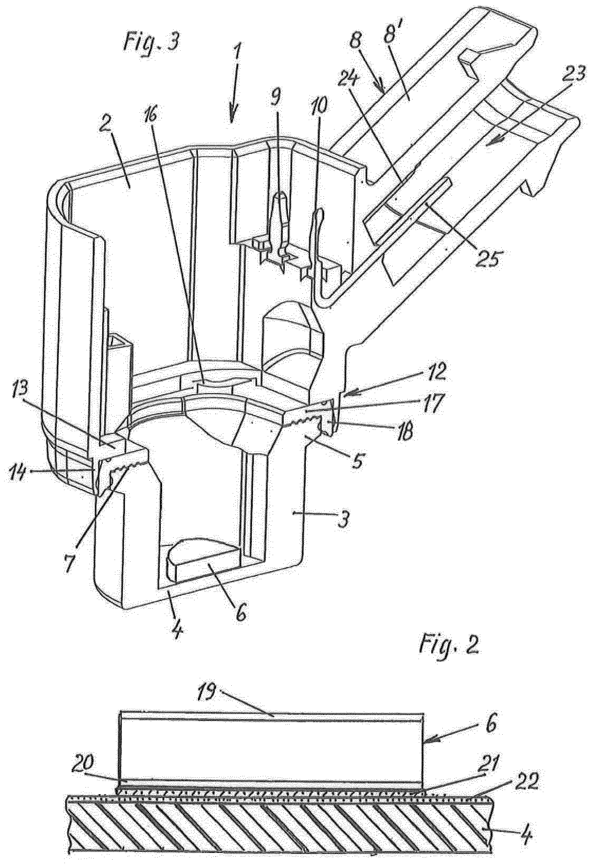

Die Fig. 2 zeigt eine vergrößerte Darstellung eines Schnittes durch die Membran 4 und das daran befestigte Piezoelement 6. Das Piezoelement 6 umfasst zwei Elektroden 19, 20, die mittels in der Zeichnung nicht dargestellten Anschlussleitungen mit der Platine im Gehäuse 2 verbunden sind. Das Piezoelement 6 ist auf der Seite, die der Membran 4 zugewandt ist, im gezeigten Ausführungsbeispiel ist dies die Seite mit der Elektrode 20, mit einer Schicht 21 aus einem elektrisch nicht leitenden Material versehen. Zur Befestigung des Piezoelementes 6 mit der elektrisch isolierenden Schicht 21 dient ein Kleber 22, der auf der Innenseite der Membran 4 aufgetragen ist. Die Schicht 21 kann beispielsweise eine Lackschicht sein.

Die Fig. 3 zeigt einen Längsschnitt durch den Ultraschallsensor 1 gemäß Fig. 1, jedoch im zusammengefügten Zustand der Bauteile und in einer anderen Perspektive. Dadurch ist auch der Stutzen 8' am Gehäuse 2 im Schnitt dargestellt, woraus ersichtlich ist, dass der Stutzen 8' als Stecker 23 ausgebildet ist und die darin vorgesehenen Kontakte 24, 25 mit den Steckkontakten 9, 10 verbunden sind. Der ringförmige Stopfen 17 befindet sich innerhalb des Stutzens 14 und ist in guter flächiger Anlage an dem Flansch 13 des Gehäuses 2. Zwischen dem Flansch 13 und dem Stopfen 17 befindet sich das Kontaktelement 16, das somit eine elektrisch leitende Verbindung zwischen dem Stopfen 17 und dem Steckkontakt 9, bzw. Kontakt 24 im Stecker 23 herstellt, wobei der Kontakt 24 einen Masseanschluss bildet. Der Membrantopf 3 liegt mit der elektrisch leitenden Stirnseite 7 des Flansches 5 an der unteren Stirnseite des Stopfens 17, wobei der Wulst 18 den äußeren Rand des Flansches 5 umgibt und an diesem anliegt. Da der Stopfen 17 aus elektrisch leitendem Material ist oder zumindest elektrisch leitende Stirnflächen besitzt, die auch elektrisch leitend miteinander verbunden sind, ist eine Massenanbindung der Membran 4 bzw. des Membrantopfes 3 über den Stopfen 17, das Kontaktelement 16, den elektrischen Leiter 15 (Fig. 1) zum Kontakt 24 gegeben. Zur sicheren Befestigung des Membrantopfes 3 am Gehäuse 2 und guten Kontaktierung der jeweiligen Anlageflächen und des Kontaktelementes 16 ist vorzugsweise ein in der Zeichnung nicht gezeigter Ring vorgesehen, der hinter den Flansch 5 des Membrantopfes 3 greift und an der Umfangsfläche des Stutzens 14 befestigt ist. Durch die beschriebene Ausführung wird sichergestellt, dass die Membran 4, der Stopfen 17 und das Gehäuse 2 kein Potenzial haben.

## Patentansprüche

1. Ultraschallsensor (1) mit einem Gehäuse (2) und einer Membran (4), an der ein Piezoelement (6) befestigt ist, und mit einem elektrischen Anschlussbereich (8), der einen Masseanschluss (24) umfasst, wobei zwischen der Membran (4) und dem Piezoelement (6) eine Schicht (21) aus einem elektrisch nicht leitenden Material angeordnet ist, und die Membran (4) elektrisch leitend mit dem Masseanschluss (24) verbunden ist, wobei die Membran (4) integraler Teil eines Membrantopfes (3) ist, der an dem Gehäuse (2) befestigt ist, wobei der Membrantopf (3) an seiner der Membran (4) abgewandten Seite einen radialen Flansch (5) aufweist, wobei an dem Gehäuse (2) ein radialer Flansch (13) und ein zum Membrantopf (3) gerichteter Stutzen (14) ausgebildet sind, die zur Aufnahme des Flansches (5) am Membrantopf (3) dienen, wobei zwischen dem Flansch (5) des Membrantopfes (3) und dem Flansch (13) des Gehäuses (2) ein Entkopplungselement (17) aus elektrisch leitfähigem Material und/oder mit elektrisch leitenden Stirnflächen angeordnet ist, und wobei an einer Stirnseite des Entkopplungselements (17) ein Kontaktelement (16) anliegt, das mit dem Masseanschluss (24) verbunden ist.

2. Ultraschallsensor nach Anspruch 1,
**dadurch gekennzeichnet, dass** die nicht leitende Schicht (21) ein Lack ist, der an einer Elektrode (20) des Piezoelementes (6) aufgebracht ist.

3. Ultraschallsensor nach Anspruch 2,
**dadurch gekennzeichnet, dass** das Piezoelement (6) mittels eines Klebers (22) mit seiner Lackschicht (21) an der Membran (4) befestigt ist.

4. Ultraschallsensor nach einem der vorhergehenden Ansprüche,
**dadurch gekennzeichnet, dass** der Flansch (5) eine Stirnseite (7) aufweist, die mit einer elektrisch leitenden Oberfläche und/oder mit einer Beschichtung aus einem elektrisch leitenden Material versehen ist.

5. Ultraschallsensor nach einem der vorhergehenden Ansprüche,
**dadurch gekennzeichnet, dass** der elektrische Anschlussbereich (8) einen in einem Stutzen (14) am Gehäuse (2) ausgebildeten Stecker (23) umfasst.

## Claims

1. Ultrasonic sensor (1) having a housing (2) and a diaphragm (4), to which a piezoelectric element (6) is fixed, and having an electrical connection region (8), which comprises an earth connection (24), wherein a layer (21) of an electrically nonconductive material is arranged between the diaphragm (4) and the piezoelectric element (6), and the diaphragm (4) is electrically conductively connected to the earth connection (24), wherein the diaphragm (4) is an integral part of a diaphragm pot (3), which is fixed to the housing (2), wherein the diaphragm pot (3) has a radial flange (5) on its side facing away from the diaphragm (4), wherein a radial flange (13) and a support (14) directed towards the diaphragm pot (3) are formed on the housing (2) and are used to accommodate the flange (5) on the diaphragm pot (3), wherein a decoupling element (17) of electrically conductive material and/or having electrically conductive end surfaces is arranged between the flange (5) of the diaphragm pot (3) and the flange (13) of the housing (2), and wherein a contact element (16) which is connected to the earth connection (24) rests on an end face of the decoupling element (17).

2. Ultrasonic sensor according to Claim 1, **characterized in that** the nonconductive layer (21) is a lacquer, which is applied to an electrode (20) of the piezoelectric element (6).

3. Ultrasonic sensor according to Claim 2, **characterized in that** the piezoelectric element (6) is fixed to the diaphragm (4) by its lacquer layer (21) by means of an adhesive (22).

4. Ultrasonic sensor according to one of the preceding claims,
**characterized in that** the flange (5) has an end face (7) which is provided with an electrically conductive surface and/or with a coating of an electrically conductive material.

5. Ultrasonic sensor according to one of the preceding claims,
**characterized in that** the electrical connection region (8) comprises a connector (23) formed in a support (14) on the housing (2).

## Revendications

1. Capteur à ultrasons (1), comprenant un boîtier (2) et une membrane (4) à laquelle est fixé un élément piézoélectrique (6), et comprenant une zone de raccordement (8) électrique qui comporte une borne de masse (24), une couche (21) en un matériau non conducteur d'électricité étant disposée entre la membrane (4) et l'élément piézoélectrique (6) et la membrane (4) étant reliée de manière électriquement conductrice à la borne de masse (24), la membrane (4) faisant partie intégrante d'un pot à membrane (3) qui est fixé au boîtier (2), le pot à membrane (3) possédant une bride radiale (5) au niveau de son côté à l'opposé de la membrane (4), une bride radiale (13) et un manchon (14) orienté vers le pot à membrane (3) étant formés au niveau du boîtier (2), lesquels servent à accueillir la bride (5) sur le pot à membrane (3), un élément de découplage (17) en matériau électriquement conducteur et/ou pourvu de faces frontales électriquement conductrices étant disposé entre la bride (5) du pot à membrane (3) et la bride (13) du boîtier (2), et un élément de contact (16) qui est relié à la borne de masse (24) reposant contre un côté frontal de l'élément de découplage (17).

2. Capteur à ultrasons selon la revendication 1, **caractérisé en ce que** la couche (21) non conductrice est un vernis qui est appliqué sur une électrode (20) de l'élément piézoélectrique (6).

3. Capteur à ultrasons selon la revendication 2, **caractérisé en ce que** l'élément piézoélectrique (6) est fixé à la membrane (4) par sa couche de vernis (21) au moyen d'un agent adhésif (22).

4. Capteur à ultrasons selon l'une des revendications précédentes, **caractérisé en ce que** la bride (5) possède un côté frontal (7) qui est pourvu d'une surface électriquement conductrice et/ou d'un revêtement en un matériau électriquement conducteur.

5. Capteur à ultrasons selon l'une des revendications précédentes, **caractérisé en ce que** la zone de raccordement (8) électrique comporte une fiche (23) formée dans un manchon (14) sur le boîtier (2).
